# EUROPÄISCHE PATENTSCHRIFT

(11) **EP 1 191 201 B1**
(45) Veröffentlichungstag und Bekanntmachung des Hinweises auf die Patenterteilung: **02.03.2005**
(21) Anmeldenummer: 01890272.6
(22) Anmeldetag: 20.09.2001
(51) Int. Cl.: F02B 31/08, F02D 9/14

(54) **Viertakt-Brennkraftmaschine mit mindestens zwei Einlassventilen pro Zylinder**
Four stroke internal combustion engine with at least two intake valves per cylinder
Moteur à combustion interne à quatre temps avec au moins deux soupapes d'admission par cylindre

(30) Priorität: 21.09.2000 AT 6962000 U
(43) Veröffentlichungstag der Anmeldung: 27.03.2002
(73) Patentinhaber: AVL List GmbH, 8020 Graz (AT)
(72) Erfinder: Kapus, Paul Dr., A-8111 Judendorf (AT)
(74) Vertreter: Babeluk, Michael, Dipl.-Ing.

(56) Entgegenhaltungen:
- EP-B- 0 764 773
- AT-B- 402 535
- AT-U- 2 434
- AT-U- 3 138
- US-A- 5 803 045
- PATENT ABSTRACTS OF JAPAN vol. 009, no. 100 (M-376), 2. Mai 1985 (1985-05-02) -& JP 59 224466 A (TOYOTA MOTOR CORP), 17. Dezember 1984 (1984-12-17)

## Beschreibung

Die Erfindung betrifft eine Viertakt-Brennkraftmaschine mit mindestens zwei Einlassventilen pro Zylinder, mit mindestens zwei zu den Einlassventilen führenden Einlasskanälen, von welchen ein erster Einlasskanal als ungedrosselter, eine Tangentialströmung erzeugender Kanal ausgeführt ist und ein zweiter Einlasskanal eine in Abhängigkeit von der Motorlast betätigbare Drosseleinrichtung aufweist und als Neutralkanal ausgeführt ist, mit zumindest einem Kraftstoff in zumindest zwei Einlasskanäle einspritzenden Einspritzventil pro Zylinder, welches so angeordnet ist, dass zumindest zwei Kraftstoffstrahlen des Einspritzventiles durch eine definierte Öffnung in der Kanaltrennwand zwischen den beiden Einlasskanälen hindurch auf Einlassöffnungen in den Brennraum gerichtet sind, wobei im geschlossenen Zustand der Drosseleinrichtung ein definierter Mindestdurchfluss durch den zweiten Einlasskanal erzeugbar ist.

Ständig steigende Anforderungen an den Kraftstoffverbrauch und die Reduktion der Abgasemissionen, insbesondere der Kohlenwasserstoffe und der Stickoxide, erfordern den Einsatz neuer Technologien im Bereich der Verbrennungskraftmaschinen.

Ein wesentlicher Grund für den gegenüber z. B. Dieselmotoren höherem spezifischen Kraftstoffverbrauch einer fremdgezündeten Brennkraftmaschine liegt in der Betriebsweise mit vorgemischtem homogenem Kraftstoff-Luftgemisch. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 25 % geschätzt werden. Ein Teil dieses Verbesserungspotentiales kann genutzt werden, wenn im Teillastbereich eine Verringerung der Drosselung möglich ist.

Aus der AT 402 535 B ist eine Brennkraftmaschine, bei der der Kraftstoff über ein Einspritzventil durch eine Öffnung zwischen zwei benachbarten Kanälen hindurch in beide Einlasskanäle eingespritzt wird, bekannt. Durch die Öffnung in der Kanaltrennwand zwischen den beiden benachbarten Einlasskanälen kann allerdings eine Querströmung stattfinden, die zum Verblasen des Einspritzstrahles führt, insbesondere wenn eine Abgasrückführung oder Zuführung von Zusatzluft in den Tangentialkanal erfolgt. Im Extremfall wird der Kraftstoffstrahl, der für den Tangentialkanal bestimmt ist, durch die Öffnung in den Neutralkanal eingespritzt.

Um dies zu verhindern, wird in der AT 2434 U1 bei einer Brennkraftmaschine der genannten Art vorgeschlagen, dass die Drosseleinrichtung in geschlossenem Zustand einen definierten Mindestdurchfluss zwischen 5% und etwa 20% erzeugt. Dadurch soll erreicht werden, dass der Kraftstoffstrahl des Tangentialkanales auch in diesem verbleibt und beide Einspritzstrahlen die Wände der Einlasskanäle mit Kraftstoff nicht benetzen.

Auch aus der EP 0 764 773 A1 ist es bekannt, im Neutralkanal eine Drosseleinrichtung vorzusehen, welche in geschlossenem Zustand einen definierten Mindestdurchfluss erzeugt, um eine stabile radiale Gemischschichtung zu realisieren, deren Ausprägung mit der Motorlast variiert werden kann. Durch die definierte Leckageöffnung kann allerdings das Verblasen des Kraftstoffstrahles und der damit entstehende Wandbenetzungseffekt an der Außenwand des Neutralkanales nicht völlig vermieden werden, was sich nachteilig auf die Kohlenwasserstoffemissionen auswirkt.

Aus der AT 003 138 U1 ist eine Viertakt-Brennkraftmaschine mit mindestens zwei Einlassventilen pro Zylinder bekannt, bei der im Bereich der Kanaltrennwand zwischen den beiden Einlasskanälen zwischen der Drosseleinrichtung und der definierten Öffnung ein durch Strömungsleitflächen definierter Leckageströmungsweg für den Mindestdurchfluss vorgesehen ist, welcher durch einen mitgegossenen Leckagekanal gebildet ist. Dadurch sollen die Emissionen verbessert werden. Der mitgegossene Leckagekanal ist allerdings konstruktiv und fertigungstechnisch relativ aufwendig.

Aus der japanischen Offenlegungsschrift JP 59-224466 ist eine Brennkraftmaschine mit zwei Einlasskanälen pro Zylinder bekannt, bei der die Kraftstoffeinspritzung über eine Öffnung in der Kanaltrennwand durch ein einziges Einspritzventil erfolgt. Im Bereich der Öffnung ist eine Drosselklappe vorgesehen, welche in der geschlossenen Stellung einen Spalt zur Kanaltrennwand ausbildet, durch welchen Kraftstoff in den gesperrten Einlasskanal eingespritzt werden kann. Dadurch soll die Leistung im Teillastbereich erhöht werden. Der Spalt verursacht allerdings eine nicht genau definierte Leckageströmung und kann sich nachteilig auf Verbrennung und Emission auswirken.

Aufgabe der Erfindung ist es, diese Nachteile zu vermeiden und bei einer Brennkraftmaschine der eingangs genannten Art auf möglichst einfache Weise die Emissionen zu verbessern.

Erfindungsgemäß erfolgt dies dadurch, dass die Drosseleinrichtung zur Erzeugung des definierten Mindestdurchflusses eine Leckageöffnung aufweist, wobei die Drosseleinrichtung im Bereich der definierten Öffnung der Kanaltrennwand angeordnet ist. Besonders vorteilhaft ist es dabei, dass die Drosseleinrichtung hydraulisch stromabwärts der Mündung des Einspritzventiles angeordnet ist. Auf diese Weise wird ein Verblasen des Kraftstoffstrahles und damit eine Wandbenetzung der Wand des zweiten Einlasskanales vermieden. Da die Drosseleinrichtung unmittelbar beim Einspritzventil angeordnet ist, ist kein eigener Leckagekanal erforderlich. Trotzdem wird im Bereich der Öffnung in der Trennwand eine gerichtete Strömung erzeugt. Vorzugsweise ist vorgesehen, dass die Drosseleinrichtung zumindest teilweise hydraulisch stromabwärts der definierten Öffnung in der Kanalwand angeordnet ist. Dadurch ergibt sich der zusätzliche Vorteil, dass ein ungewünschtes Querströmen zwischen den beiden Einlasskanälen durch die Öffnung in der Trennwand bei gedrosseltem zweiten Einlasskanal deutlich vermindert wird.

Die Drosseleinrichtung kann durch eine Drosselklappe gebildet sein. Um Strömungsverluste in der geöffneten Stellung zu vermeiden ist es aber vorteilhaft, wenn die Drosseleinrichtung als Schieber ausgeführt ist.

Eine fertigungstechnisch einfache Bauweise ergibt sich, wenn der vorzugsweise als Flachschieber ausgebildete Schieber quer zu beiden Einlasskanälen verschiebbar ist. In einer besonders bevorzugten Ausführungsvariante ist dabei vorgesehen, dass der Schieber eine einzige Schieberöffnung aufweist, welche so geformt ist, dass in der Öffnungsstellung des Schiebers der Durchfluss durch beide Einlasskanäle vollkommen freigegeben ist und in der Schließstellung der Durchfluss durch den ersten Einlasskanal vollkommen freigegeben, der Durchfluss durch den zweiten Einlasskanal hingegen bis auf den Mindestdurchfluss gesperrt ist. Die Leckageöffnung wird dabei vorzugsweise durch eine Ausbuchtung in der Schieberöffnung gebildet.

Um die Kraftstoffeinspritzung in den gedrosselten zweiten Einlasskanal ohne Benetzung der Kanalwände zu ermöglichen, ist vorgesehen, dass die Leckageöffnung in der Schließstellung der Drosseleinrichtung in der Strahlrichtung des in den zweiten Einlasskanales eingespritzten Kraftstoffstrahles des Einspritzventiles so angeordnet ist, dass in der Schließstellung der Kraftstoff ungehindert in den zweiten Einlasskanal einspritzbar ist.

Die Erfindung wird im Folgenden anhand der Figuren näher erläutert. Es zeigen in schematischer Darstellung die
- Fig. 1: die Einlasskanäle eines Zylinders einer erfindungsgemäßen Brennkraftmaschine in einer Schrägansicht in einer ersten Ausführungsvariante,
- Fig. 2: die Einlasskanäle in einer Draufsicht,
- Fig. 3: den Schieber aus Fig. 1 und 2 in geöffnetem Zustand,
- Fig. 4: diesen Schieber in geschlossenem Zustand,
- Fig. 5: einen Einlasskanal dieser Brennkraftmaschine in einem Schnitt gemäß der Linie V-V in Fig. 2,
- Fig. 6: die Einlasskanäle eines Zylinders einer erfindungsgemäßen Brennkraftmaschine in einer zweiten Ausführungsvariante,
- Fig. 7: die Einlasskanäle in einer Draufsicht,
- Fig. 8: die Drosselklappe aus Fig. 6 und 7 in geschlossenem Zustand,
- Fig. 9: einen Einlasskanal dieser Brennkraftmaschine in einem Schnitt gemäß der Linie IX-IX in Fig. 7,
- Fig. 10: und 11 verschiedene Anordnungen für Tangentialströmung erzeugende Einlasskanäle.

Funktionsgleiche Teile sind in den Ausführungsbeispielen mit gleichen Bezugszeichen versehen.

Die Brennkraftmaschine weist zumindest einen Zylinder 1 mit zwei Einlassventilen 2, 3 auf, wobei zum Einlassventil 2 ein erster Einlasskanal 4 und zum Einlassventil 3 ein zweiter Einlasskanal 5 führt. Erster und zweiter Einlasskanal 4, 5 münden über Einlassöffnungen 2a, 3a, welche durch die Einlassventile 2, 3 steuerbar sind, in einen Brennraum 6. Der erste Einlasskanal 4 ist als ungedrosselter, eine Tangentialströmung erzeugender Kanal ausgeführt, um im Brennraum 6 eine Drallströmung 7 um die Zylinderachse 1a zu generieren. Der zweite Einlasskanal 5 ist im Ausführungsbeispiel als Neutralkanal ausgebildet und bildet eine drallneutrale Strömung 8 im Brennraum.

Der erste Einlasskanal 4 kann dabei durch einen Tangentialkanal gebildet sein. Es ist aber auch möglich, den ersten Einlasskanal 4 strömungsneutral auszubilden und die Tangentialströmung im Brennraum durch einen eigenen Tangentialnebenkanal, welcher stromaufwärts des Einlassventiles 2 in den ersten Einlasskanal 4 einmündet, zu generieren.

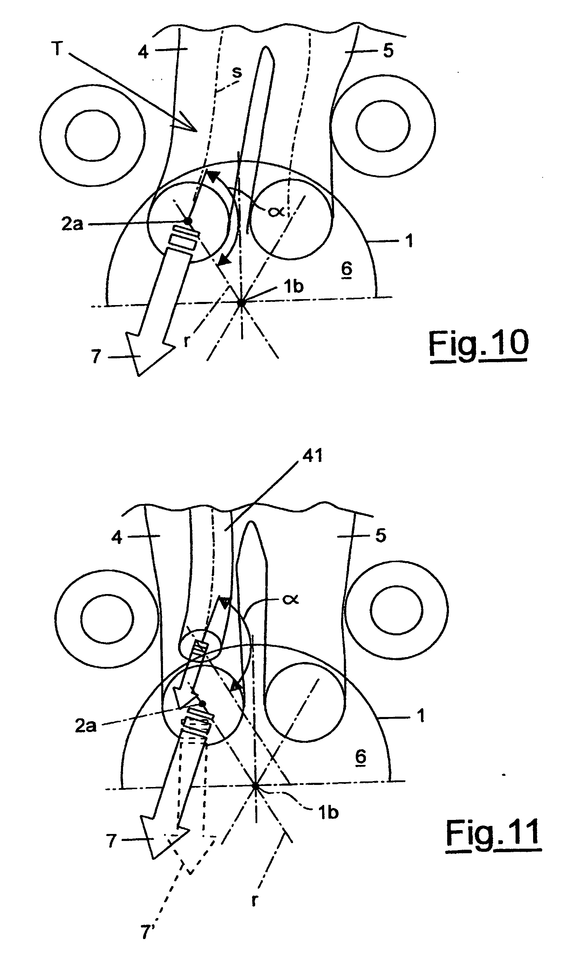

Die Begriffe Tangentialkanal und Tangentialnebenkanal werden anhand der Fig. 10 und 11 erläutert.

Als Tangentialkanal ist hier ein Kanal T zu verstehen, dessen Strömungsmittellinie s mit einer Zylindermittelpunkt 1b und Ventilmittelpunkt 2a verbindenden Geraden r einen Winkel α zwischen 80° und 120° aufspannt, wie in Fig. 10 angedeutet ist.

Mit Tangentialnebenkanal wird hier ein Nebenkanal 41 bezeichnet, welcher eine einem Tangentialkanal T äquivalente Strömung 7 im Brennraum 6 erzeugt. Dabei entspricht der Winkel α zwischen 80° und 120° dem Winkel zwischen der Mittellinie eines gedachten äquivalenten (die gleiche Strömung hervorrufenden) Tangentialkanals und der Verbindungslinie r des Ventilmittelpunkts 2a und des Zylindermittelpunkts 1b (Fig. 11). Mit dem Pfeil 7' ist die neutrale Strömung bei abgeschaltetem Nebenkanal 41 angedeutet.

Im Bereich einer Kanaltrennwand 10 zwischen dem ersten Einlasskanal 4 und dem zweiten Einlasskanal 5 ist ein Einspritzventil 11 angeordnet, welches über eine definierte Öffnung 12 in der Kanaltrennwand 10 Kraftstoff 13, 14 in den ersten Einlasskanal 4 und den zweiten Einlasskanal 5 einspritzt. Im Bereich der Öffnung 12 ist stromabwärts der Mündung 11a des Einspritzventiles 11 eine Drosseleinrichtung 15 angeordnet, welche im geöffneten Zustand den Durchfluss durch den zweiten Einlasskanal 5 vollständig freigibt. Im geschlossenen Zustand dagegen wird der zweite Einlasskanal 5 bis auf eine definierte Leckageöffnung 17 geschlossen. Die Leckageöffnung 17 ist dabei im Bereich der Mündung 11a des Einspritzventiles 11 hinsichtlich der Lage und Größe so angeordnet, dass der in Richtung der Einlassöffnung 3a gelenkte Strahl des Kraftstoffes 14 die Leckageöffnung 17 ungehindert passieren kann.

Dadurch, dass die Drosseleinrichtung 15 unmittelbar bei der Mündung 11a des Einspritzventiles 11 angeordnet ist, ist für die Leckageströmung kein eigener Leckageströmungsweg erforderlich. Trotzdem wird eine Ablenkung des Kraftstoffstrahies 14 in Richtung der Kanalwände 5a des zweiten Einlasskanales 5 wirksam vermieden. Zusätzlich ergibt sich dadurch, dass die Drosseleinrichtung 15 zumindest teilweise stromabwärts der Öffnung 12 in der Trennwand 10 liegt, der Vorteil, dass ein unerwünschtes Querströmen zwischen den beiden Einlasskanälen 4, 5 wirksam vermieden wird.

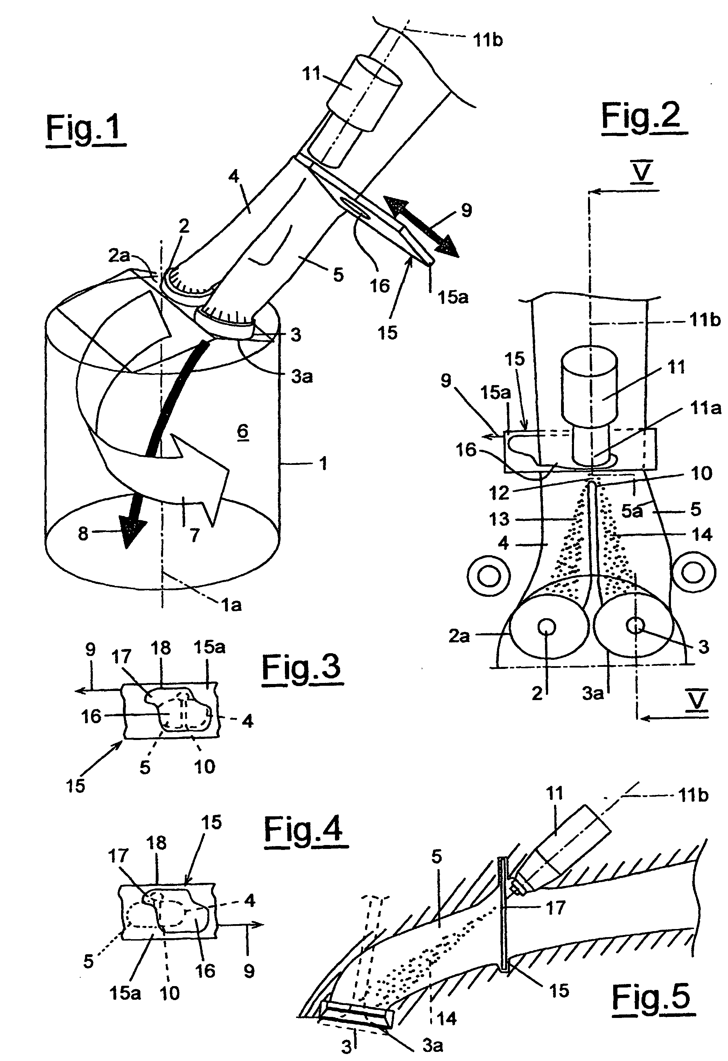

Die Fig. 1 bis 5 zeigen eine erste Ausführungsvariante, bei der die Drosseleinrichtung 15 durch einen quer zu den Einlasskanälen 4, 5 entsprechend den Pfeilen 9 bewegbaren Schieber 15a gebildet ist. Der Schieber 15a weist eine Schieberöffnung 16 auf, welche von der Form und Größe so ausgebildet ist, dass im geöffneten Zustand beide Einlasskanäle 4, 5 vollständig freigegeben sind, wie aus Fig. 3 ersichtlich ist. Im geschlossenen Zustand wird hingegen der zweite Einlasskanal 5 bis auf eine definierte Leckageöffnung 17 geschlossen. Die Leckageöffnung 17 ist durch eine Ausbuchtung 18 in der Schieberöffnung 16 gebildet.

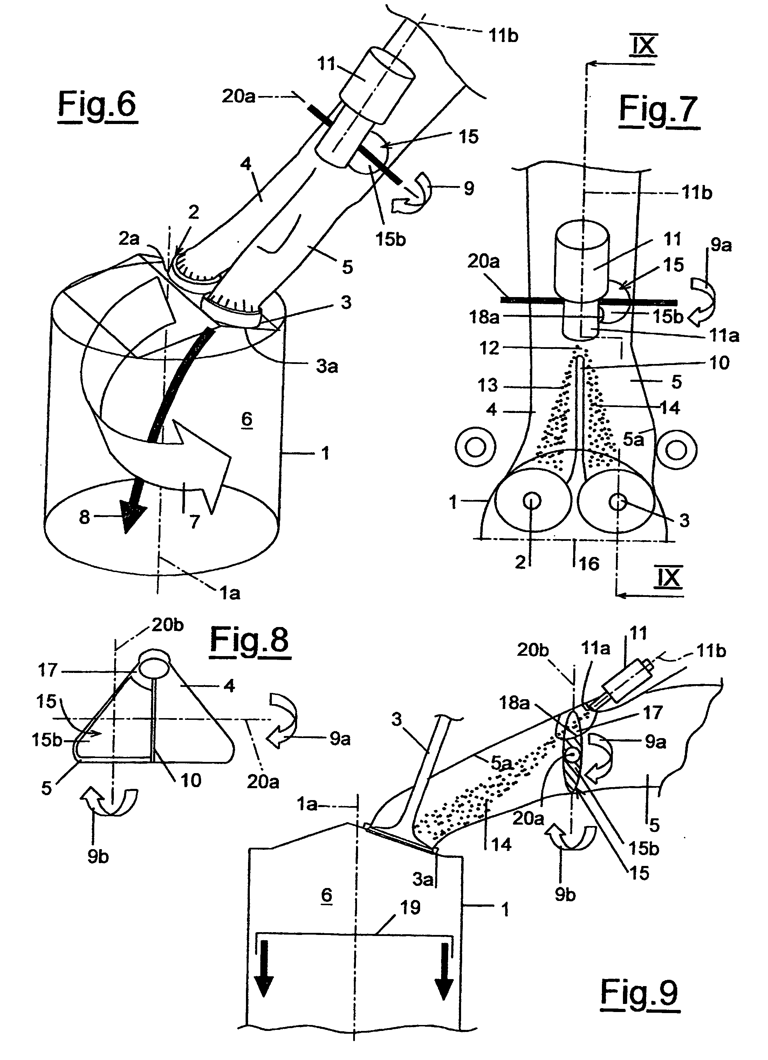

Die Fig. 6 bis 9 zeigen eine zweite Ausführungsvariante, bei der die Drosseleinrichtung 15 als Drosselklappe 15b ausgebildet ist. Die Drosselklappe 15b ist dabei hydraulisch stromabwärts der Mündung 11a des Einspritzventiles 11 im zweiten Einlasskanal 5 angeordnet. Die Leckageöffnung 17 ist durch eine Ausformung 18a der Drosselklappe 15b gebildet. Um unkontrollierte Leckagen zu vermeiden, sollte der Spalt zwischen der Drosselklappe 15b und den Kanalwänden 5a des zweiten Einlasskanales 5 im geschlossenen Zustand möglichst klein sein. Die Drehachse der Drosselkappe 15b kann in Hochrichtung - also im Wesentlichen parallel zur Zylinderachse 1a - oder in Querrichtung - also normal zur Zylinderachse 1a - angeordnet sein. Beide Varianten sind in den Fig. 8 und 9 angedeutet. Mit 20a ist dabei eine querliegende Drehachse und mit 20b eine in Hochrichtung positionierte Drehachse bezeichnet. Die Pfeile 9a bzw. 9b deuten die Bewegungsrichtung der Drosselklappe 15b für die Drehachsen 20a bzw. 20b an. Mit Bezugszeichen 19 ist ein im Zylinder 1 hin- und hergehender Kolben symbolisiert.

## Patentansprüche

1. Viertakt-Brennkraftmaschine mit mindestens zwei Einlassventilen (2, 3) pro Zylinder (1), mit mindestens zwei zu den Einlassventilen (2, 3) führenden Einlasskanälen (4, 5), von welchen ein erster Einlasskanal (4) als ungedrosselter, eine Tangentialströmung erzeugender Kanal ausgeführt ist und ein zweiter Einlasskanal (5) eine in Abhängigkeit von der Motorlast betätigbare Drosseleinrichtung aufweist und als Neutralkanal ausgeführt ist, mit zumindest einem Kraftstoff (13, 14) in zumindest zwei Einlasskanäle (4, 5) einspritzenden Einspritzventil (2, 3) pro Zylinder (1), welches so angeordnet ist, dass zumindest zwei Kraftstoffstrahlen des Einspritzventils (2, 3) durch eine definierte Öffnung (12) in der Kanaltrennwand (10) zwischen den beiden Einlasskanälen (4, 5) hindurch auf Einlassöffnungen (2a, 3a) in den Brennraum (6) gerichtet sind, wobei im geschlossenen Zustand der Drosseleinrichtung ein definierter Mindestdurchfluss durch den zweiten Einlasskanal (5) erzeugbar ist, wobei die Drosseleinrichtung (15) zur Erzeugung des definierten Mindestdurchflusses eine Leckageöffnung (17) aufweist, **dadurch gekennzeichnet, dass** die Drosseleinrichtung (15) im Bereich der definierten Öffnung (12) der Kanaltrennwand (10) und hydraulisch stromabwärts der Mündung (11a) des Einspritzventils (11) angeordnet ist, die Leckageöffnung (17) in der Schließstellung der Drosseleinrichtung (15) in der Strahlrichtung des in den zweiten Einlasskanals (5) eingespritzten Kraftstoffstrahles des Einspritzventils (2, 3) so angeordnet ist, dass in der Schließstellung der Kraftstoff (13, 14) ungehindert in den zweiten Einlasskanal (5) einspritzbar ist, wobei die Leckageöffnung (17) als Ausformung (18, 18a) der Drosseleinrichtung (15) ausgebildet ist.

2. Brennkraftmaschine nach Anspruch 1, **dadurch gekennzeichnet, dass** die Drosseleinrichtung (15) zumindest teilweise hydraulisch stromabwärts der definierten Öffnung (12) in der Kanalwand (10) angeordnet ist.

3. Brennkraftmaschine nach Anspruch 1 oder 2, **dadurch gekennzeichnet, dass** die Drosseleinrichtung (15) durch eine Drosselklappe (15b) gebildet ist.

4. Brennkraftmaschine nach Anspruch 1 oder 2, **dadurch gekennzeichnet, dass** die Drosseleinrichtung (15) als Schieber (15a) ausgeführt ist.

5. Brennkraftmaschine nach Anspruch 4, **dadurch gekennzeichnet, dass** der Schieber (15a) als Flachschieber ausgebildet ist.

6. Brennkraftmaschine nach Anspruch 4 oder 5, **dadurch gekennzeichnet, dass** der Schieber (15a) quer zu beiden Einlasskanälen (4, 5) verschiebbar ist.

7. Brennkraftmaschine nach einem der Ansprüche 4 bis 6, **dadurch gekennzeichnet, dass** der Schieber (15a) eine einzige Schieberöffnung (16) aufweist, welche so geformt ist, dass in der Öffnungsstellung des Schiebers (15a) der Durchfluss durch beide Einlasskanäle (4, 5) vollkommen freigegeben ist und in der Schließstellung der Durchfluss durch den ersten Einlasskanal (4) vollkommen freigegeben, der Durchfluss durch den zweiten Einlasskanal (5) hingegen bis auf den Mindestdurchfluss gesperrt ist.

8. Brennkraftmaschine nach Anspruch 7, **dadurch gekennzeichnet, dass** die Leckageöffnung (17) als Ausbuchtung (18) der Schieberöffnung (16) ausgebildet ist.

## Claims

1. A four-stroke internal combustion engine with at least two intake valves (2, 3) per cylinder, comprising at least two intake ports (4, 5) leading to the intake valves (2, 3), of which a first intake port (4) is configured as an unthrottled port producing a tangential flow and a second port comprises a throttle device which can be actuated depending on the engine load and is configured as a neutral port, with at least one injection valve (2, 3) per cylinder (1) injecting at least one fuel (13, 14) in at least two intake ports (4, 5), which valve is arranged in such a way that at least two fuel jets of the injection valve (2, 3) are directed through a defined opening (12) in the port separating wall (10) between the two intake ports (4, 5) towards intake openings (2a, 3a) into the combustion chamber (6), with a defined minimum flow through the second intake port (5) being achievable in the closed state of the throttle device, with the throttle device (15) having a leakage opening (17) for producing said defined minimum flow, **characterized in that** the throttle device (15) is arranged in the region of the defined opening (12) of the port separating wall (10) and hydraulically downstream of the orifice (11a) of the injection valve (11), the leakage opening (17) is arranged in the closed position of the throttle device (15) in the direction of the fuel jet of the intake valve (2, 3) as injected into the second intake port (5) in such way that in the closed position the fuel (13, 14) can be injected in an unhindered manner into the second intake port (5), with the leakage opening (17) being configured as a shaped part (18, 18a) of the throttle device (15).

2. An internal combustion engine according to claim 1, **characterized in that** the throttle device (15) is arranged at least partly hydraulically downstream of the defined opening (12) in the port wall (10).

3. An internal combustion engine according to claim 1 or 2, **characterized in that** the throttle device (15) is formed by a throttle valve (15b).

4. An internal combustion engine according to claim 1 or 2, **characterized in that** the throttle device (15) is configured as a slide valve (15a).

5. An internal combustion engine according to claim 4, **characterized in that** the slide (15a) is configured as a flat slide valve.

6. An internal combustion engine according to claim 4 or 5, **characterized in that** the slide valve (15a) is displaceable transversally to the two intake ports (4, 5).

7. An internal combustion engine according to one of the claims 4 to 6, **characterized in that** the slide valve (15a) comprises a single slide opening (16) which is shaped in such a way that in the opening position of the slide valve (15a) the flow through both intake ports (4, 5) is released completely and in the closed position the flow through the first intake port (4) is released completely and the flow through the second intake port (5) is blocked apart from the minimum flow.

8. An internal combustion engine according to claim 7, **characterized in that** the leakage opening (17) is arranged as an indentation (18) in the slide opening (16).

## Revendications

1. Moteur à combustion interne à quatre temps comportant au moins deux soupapes d'admission (2, 3) par cylindre (1), au moins deux canaux d'admission (4, 5) qui mènent aux soupapes d'admission (2, 3) et dont un premier canal d'admission (4) a la forme d'un canal non étranglé qui produit un écoulement tangentiel et un deuxième canal d'admission (5) présente une installation d'étranglement réglable en fonction de la charge du moteur et a la forme d'un canal neutre,
comportant pour chaque cylindre au moins un injecteur (2, 3) qui injecte du carburant (13, 14) dans au moins deux canaux d'admission (4, 5) et qui est disposé de telle manière qu'au moins deux jets de carburant de l'injecteur (2, 3) sont dirigés, à travers un orifice défini (12) dans la paroi de séparation de canal (10) entre les deux canaux d'admission (4, 5), sur des orifices d'admission (2a, 3a) dans la chambre de combustion (6),
un flux minimal à travers le deuxième canal d'admission (5) pouvant alors être produit lorsque l'installation d'étranglement est à l'état fermé et l'installation d'étranglement (15) présentant un orifice de fuite (17) afin de produire le flux minimal défini,
**caractérisé en ce que**
l'installation d'étranglement (15) est disposée dans la zone de l'orifice défini (12) dans la paroi de séparation de canal (10) et hydrauliquement en aval du débouché (11a) de l'injecteur (11), et
lorsque l'installation d'étranglement (15) est en position fermée, l'orifice de fuite (17) est disposé dans la direction où le jet de carburant de l'injecteur (2, 3) est injecté dans le deuxième canal d'admission (5) de telle manière que, en position fermée, le carburant (13, 14) peut être injecté sans obstacle dans le deuxième canal d'admission (5), l'orifice de fuite (17) formant une déformation (18, 18a) de l'installation d'étranglement (15).

2. Moteur à combustion interne selon la revendication 1,
**caractérisé en ce que**
l'installation d'étranglement (15) est au moins en partie disposée hydrauliquement dans la paroi de canal (10) en aval de l'orifice défini (12).

3. Moteur à combustion interne selon la revendication 1 ou 2,
**caractérisé en ce que**
l'installation d'étranglement (15) est formée par un étrangleur (15b).

4. Moteur à combustion interne selon la revendication 1 ou 2,
**caractérisé en ce que**
l'installation d'étranglement (15) a la forme d'un coulisseau (15a).

5. Moteur à combustion interne selon la revendication 4,
**caractérisé en ce que**
le coulisseau (15a) prend la forme d'un coulisseau plat.

6. Moteur à combustion interne selon la revendication 4 ou 5,
**caractérisé en ce que**
le coulisseau (15a) peut coulisser transversalement aux deux canaux d'admission (4, 5).

7. Moteur à combustion interne selon l'une des revendications 4 à 6,
**caractérisé en ce que**
le coulisseau (15a) présente une seule ouverture de coulisseau (16) formée de telle manière que, lorsque le coulisseau (15a) est en position ouverte, le flux est entièrement libéré à travers les deux canaux d'admission (4, 5), et
dans la position fermée, le flux à travers le premier canal d'admission (4) est entièrement libéré, mais par contre le flux à travers le deuxième canal d'admission (5) est bloqué jusqu'au flux minimal.

8. Moteur à combustion interne selon la revendication 7,
**caractérisé en ce que**
l'orifice de fuite (17) forme un évasement (18) de l'ouverture de coulisseau (16).
